# EUROPÄISCHE PATENTANMELDUNG

(11) **EP 2 869 267 A1**
(43) Veröffentlichungstag der Anmeldung: **06.05.2015**
(21) Anmeldenummer: 14190861.6
(22) Anmeldetag: 29.10.2014
(51) Int. Cl.: G06T 7/00

(54) **Automatische Korrektur der Gierausrichtung eines Kamerasystems für ein Fahrzeug**

(30) Priorität: 31.10.2013 DE 102013222268
(71) Anmelder: Continental Automotive GmbH, 30165 Hannover (DE)
(72) Erfinder: von Rosenberg, Harald, 78126 Königsfeld (DE); Schröer, Frank, 81476 München (DE); Schmalriede, Tobias, 60321 Frankfurt (DE); Garschke, Thomas, 78250 Tengen (DE)

(57) **Zusammenfassung**

Kalibrationssystem (300) zur automatischen Korrektur der Gierausrichtung eines Kamerasystems (308, 309) für ein Fahrzeug (101), welches eine Steuereinheit (301) aufweist, die zur Bestimmung einer durchschnittlichen Orientierung eines optischen Flussfeldes eines Kamerabildes des Kamerasystems während der Fahrt des Fahrzeugs ausgeführt ist und daraufhin das projizierte Kamerabild so lange virtuell drehen kann, bis die durchschnittliche Orientierung des optischen Flussfeldes parallel zur Fahrtrichtung des Fahrzeugs verläuft.

## Beschreibung

### Gebiet der Erfindung

Die Erfindung betrifft die Assistenz- und Sicherheitstechnik für Fahrzeuge. Insbesondere betrifft die Erfindung ein Kalibrationssystem zur automatischen Korrektur der Gierausrichtung eines Kamerasystems für ein Fahrzeug, ein Fahrzeug mit einem Kalibrationssystem, ein Verfahren zum automatischen Korrigieren der Gierausrichtung eines Kamerasystems für ein Fahrzeug, ein Programmelement und ein computerlesbares Medium.

### Technologischer Hintergrund

Bei einem Kamerasystem am Fahrzeug, und insbesondere bei einem Surroundview-System, kann die reale Vorausrichtung (Fahrtrichtung) des Fahrzeugs von der vom Kamerasystem angenommenen Vorausrichtung abweichen. Dies kann dazu führen, dass sich das im Fahrzeug dargestellte Kamerabild während der Fahrt schräg oder verdreht über den Monitor bewegt, obgleich das Fahrzeug exakt geradeaus fährt.

Insbesondere bei einem Kalibrationseinsatz, bei dem um das Fahrzeug platzierte und nicht vermessene Marker auf dem Boden verwendet werden, können derartige Abweichungen auftreten. Diese Abweichungen sind störend und ungewünscht.

### Zusammenfassung der Erfindung

Es ist eine Aufgabe der Erfindung, die Kalibration von Kamerasystemen in Fahrzeugen zu verbessern.

Diese Aufgabe wird durch die Merkmale der unabhängigen Patentansprüche gelöst. Weiterbildungen der Erfindung ergeben sich aus den Unteransprüchen und der folgenden Beschreibung.

Ein erster Aspekt der Erfindung betrifft ein Kalibrationssystem zur automatischen Korrektur der Gierausrichtung eines Kamerasystems für ein Fahrzeug. Das Kalibrationssystem weist eine Steuereinheit auf, die mit dem Kamerasystem kommunikativ verbunden werden kann und ausgeführt ist, einen möglichen Fehler in der Gierausrichtung des Kamerasystems automatisch zu korrigieren.

Hierfür ist vorgesehen, dass die Steuereinheit das optische Flussfeld des Kamerabildes des Kamerasystems während der Fahrt des Fahrzeugs bestimmt. Insbesondere kann die Steuereinheit ausgeführt sein, eine durchschnittliche Orientierung des optischen Flussfeldes des Kamerabildes zu bestimmen. Daraufhin kann sie das Kamerabild virtuell drehen, bis die durchschnittliche Orientierung des optischen Flussfeldes parallel zur Fahrtrichtung des Fahrzeugs verläuft.

Die Fahrtrichtung des Fahrzeugs kann über die Sensorik des Fahrzeugs bestimmt werden. In einem einfachen Fall kann hierfür der Lenkwinkel des Fahrzeugs gemessen werden. Zusätzlich können Mess- oder Analysedaten eines Fahrerassistenzsystems, beispielsweise eines ESP-Systems, herangezogen werden.

Das optische Flussfeld des Kamerabildes kann beispielsweise über Kontrastverfahren oder eine anderweitige Verfolgung von Objekten im Kamerabild bestimmt werden und besteht aus einer Vielzahl an Geschwindigkeitsvektoren, welche charakterisieren, wie sich verschiedene Bildpunkte zu einem gegebenen Zeitpunkt bewegen, indem zu jedem dieser Bildpunkte ein Geschwindigkeitsbetrag und eine Bewegungsrichtung bestimmt wird.

Der Einsatz von optischen Markern oder andersartigen, externen Einrichtungen ist nicht erforderlich, um die Gierausrichtung des Kamerasystems zu vermessen und zu korrigieren. Insbesondere kann das System vollautomatisch arbeiten, ohne dass Benutzereingaben erforderlich sind.

Gemäß einer Ausführungsform der Erfindung ist das Kalibrationssystem als Surroundview-Kalibrationssystem ausgeführt, welches eine Vielzahl an Kameras aufweist. Beispielsweise können vier Kameras vorgesehen sein, eine an der Vorderseite des Fahrzeugs, eine an der Rückseite des Fahrzeugs und jeweils eine weitere an der linken bzw. rechten Fahrzeugseite.

Die Kameras können selbstverständlich auch an anderen Orten angeordnet sein, beispielsweise an den Ecken des Fahrzeugs. Auch können mehr als vier Kameras vorgesehen sein.

Im Falle eines Surroundview-Kalibrationssystems mit mehreren Kameras kann vorgesehen sein, dass die Steuereinheit das optische Flussfeld für jedes einzelne Kamerabild bestimmt und dann, ggf. nach einer Verifikation, ob die optischen Flussfelder der einzelnen Bilder auch sinnvoll zusammengeführt werden können, aus den einzelnen optischen Flussfeldern ein gemitteltes optisches Gesamtflussfeld bestimmt.

Sind die Abweichungen der unterschiedlichen optischen Flussfelder zu groß, kann vorgesehen sein, dass die Steuereinheit entscheidet, dass das Kamerasystem mechanisch nachjustiert werden muss.

Nach der Bestimmung des gemittelten optischen Flussfeldes wird die durchschnittliche Orientierung des optischen Flussfeldes mit der gemessenen Fahrtrichtung des Fahrzeugs verglichen. Sind diese beiden Richtungen unterschiedlich, dreht die Steuereinheit das projizierte, aus den einzelnen Kamerabildern zusammengesetzte Gesamtkamerabild um diesen Winkel, bis die durchschnittliche Orientierung des optischen Gesamtflussfeldes parallel zur gemessenen Fahrtrichtung des Fahrzeugs verläuft. Gemäß einer weiteren Ausführungsform der Erfindung ist die Steuereinheit zur automatischen Bestimmung der durchschnittlichen Orientierung des optischen Flussfeldes des Kamerabildes und zur automatischen virtuellen Drehung des Kamerabildes zu verschiedenen Zeiten während des Betriebs des Fahrzeugs ausgeführt.

Diese Zeitpunkte können fest vorgegeben sein oder durch bestimmte Ereignisse getriggert werden.

Beispielsweise kann vorgesehen sein, dass die automatische Korrektur der Gierausrichtung immer dann durchgeführt wird, wenn die Steuereinheit ein bestimmtes Ereignis identifiziert hat, welches zu einem Fehler in der Gierausrichtung des Kamerasystems führen kann. Beispielsweise kann es sich bei diesem Ereignis um einen Stoß auf das Fahrzeug handeln, beispielsweise wenn das Fahrzeug durch ein Schlagloch fährt, da hierdurch einzelne Kameras dejustiert werden können.

Gemäß einer weiteren Ausführungsform der Erfindung ist die Steuereinheit mit einem Fahrdynamik-Assistenzsystem, welches beispielsweise ein ESP-System aufweist, kommunikativ verbunden und zur Verifikation eines von dem Fahrdynamik-Assistenzsystem festgestellten Bewegungszustands des Fahrzeugs ausgeführt.

Stellt beispielsweise das Fahrdynamik-Assistenzsystem fest, dass das Fahrzeug schleudert oder in einem Winkel zur Längsachse rutscht, kann dieser Bewegungszustand durch das Kalibrationssystem verifiziert werden, da das Kalibrationssystem in diesem Fall einen Gierwinkel feststellen müsste, der ungleich null Grad zur Fahrzeuglängsachse beträgt.

Auf diese Weise können Messfehler des Fahrdynamik-Assistenzsystems identifiziert werden.

Gemäß einer weiteren Ausführungsform der Erfindung ist das Kalibrationssystem zur Bestimmung eines Bewegungszustands eines Anhängers des Fahrzeugs ausgeführt. In diesem Fall ist zumindest ein Teil des Kamerasystems an dem Anhänger angebracht. Das Kalibrationssystem kann über die Flussfeldbestimmung der Kamerabilder der Anhängerkameras feststellen, in welche Richtung sich der Anhänger bewegt.

Gemäß einem weiteren Aspekt der Erfindung ist ein Fahrzeug mit einem oben und im Folgenden beschriebenen Kalibrationssystem angegeben. Dieses Fahrzeug kann darüber hinaus einen Anhänger aufweisen.

Gemäß einem weiteren Aspekt der Erfindung ist ein Verfahren zum automatischen Korrigieren der Gierausrichtung eines Kamerasystems für ein Fahrzeug angegeben, bei dem zunächst eine durchschnittliche Orientierung eines optischen Flussfeldes eines (oder mehrerer) Kamerabildes des Kamerasystems während der Fahrt des Fahrzeugs bestimmt wird. Daraufhin erfolgt ein virtuelles Drehen des Kamerabildes, bis die durchschnittliche Orientierung des optischen Flussfeldes parallel zur Fahrtrichtung des Fahrzeugs verläuft. Wie bereits beschrieben ist es möglich, dass im Falle mehrerer Kameras das fusionierte Gesamtbild nach dessen Projektion auf die Zielebene virtuell gedreht wird. Alternativ können auch die Einzelbilder gedreht werden.

Gemäß einem weiteren Aspekt der Erfindung ist ein Programmelement angegeben, das, wenn es auf einer Steuereinheit eines Kalibrationssystems ausgeführt wird, die Steuereinheit anweist, die oben und im Folgenden beschriebenen Verfahrensschritte durchzuführen.

Gemäß einem weiteren Aspekt der Erfindung ist ein computerlesbares Medium angegeben, auf dem ein oben und im Folgenden beschriebenes Programmelement gespeichert ist.

Dabei kann das Programmelement Teil einer Software sein, die auf der Steuereinheit eines Fahrzeugsystems gespeichert ist. Weiterhin umfasst dieses Ausführungsbeispiel der Erfindung ein Programmelement, welches schon von Anfang die Erfindung verwendet, sowie auch ein Programmelement, welches durch eine Aktualisierung (Update) ein bestehendes Programm zur Verwendung der Erfindung veranlasst.

Im Folgenden werden mit Verweis auf die Figuren Ausführungsbeispiele der Erfindung beschrieben.

### Kurze Beschreibung der Figuren

Fig. 1 zeigt ein Fahrzeug mit einem Kamerasystem gemäß einem Ausführungsbeispiel der Erfindung.
Fig. 2 zeigt ein Flussdiagramm eines Verfahrens gemäß einem Ausführungsbeispiel der Erfindung.
Fig. 3 zeigt ein Kalibrationssystem sowie ein Kamerasystem gemäß einem Ausführungsbeispiel der Erfindung.

### Detaillierte Beschreibung von Ausführungsbeispielen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

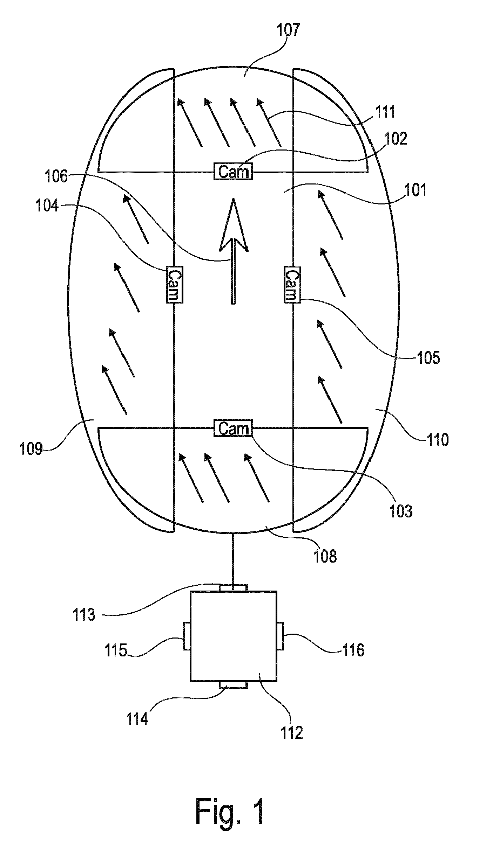

Fig. 1 zeigt ein schematisches Bild eines Fahrzeugs 101 mit einem Kamerasystem 102, 103, 104, 105 gemäß einem Ausführungsbeispiel der Erfindung, wie es beispielsweise durch das Surroundview-system auf einer Anzeigeeinrichtung des Fahrzeugs abgebildet werden kann.

Eine erste Kamera 102 ist im Frontbereich des Fahrzeugs, eine zweite Kamera 103 im Heckbereich des Fahrzeugs, eine dritte Kamera 104 auf der linken Seite des Fahrzeugs und eine vierte Kamera 105 auf der rechten Seite des Fahrzeugs angebracht. Die Kameras können auch an anderen Orten am Fahrzeug angebracht sein. Auch können weitere Kameras vorgesehen sein.

Jede der Kameras erzeugt ein Bild von einem bestimmten Bereich der Umgebung des Fahrzeugs, welches dann beispielsweise auf die Zeichenebene der Fig. 1 projiziert wird (welche der Aufstandsfläche des Fahrzeugs entspricht), so wie dies durch die vier Felder 107, 108, 109, 110 symbolisiert ist. In den vier projizierten Einzelbildern kann nun jeweils das entsprechende optische Flussfeld bestimmt werden, welches sich aus einzelnen Geschwindigkeitsvektoren 111 zusammensetzt. Aus den vier optischen Flussfeldern kann ein durchschnittlicher Gesamtflussvektor bestimmt werden (hier und im Folgenden auch als durchschnittliche Orientierung des optischen Flussfeldes bezeichnet). Selbstverständlich ist es auch möglich, dass vorgesehen ist, für jedes einzelne der vier Kamerabilder die durchschnittliche Orientierung des optischen Flussfeldes zu bestimmen.

Daraufhin wird das projizierte Gesamtbild (oder jedes der vier Einzelbilder) virtuell in der Projektionsebene gedreht, falls die Steuereinheit feststellt, dass die Bewegungsrichtung 106 des Fahrzeugs einen Winkel zur durchschnittlichen Orientierung des optischen Flussfeldes aufweist.

Beispielsweise kann vorgesehen sein, dass die bereits linsenentzerrten und auf die Zielfläche (Projektionsebene), projizierten Kamerabilder für eine Erkennung und anschließende Korrektur des Gierwinkel-Ausrichtungsfehlers herangezogen werden.

Nach der Bestimmung des optischen Flussfeldes für jedes projizierte Kamerabild können die einzelnen Flussfelder zu einem Gesamtflussfeld um das Fahrzeug herum zusammengefügt werden. Aus der gemittelten Orientierung des Gesamtflussfeldes um das Fahrzeug herum wird in einem dritten Schritt eine Schätzung für einen vorhandenen Gierwinkelfehler durchgeführt. Der ermittelte Gierwinkelfehler geht in das Kalibrationssystem ein, wodurch das Kamerabild virtuell so lange und so weit gedreht wird, bis das optische Flussfeld mit der angenommenen Fahrzeuglängsachse übereinstimmt, falls sich das Fahrzeug entlang der Fahrzeuglängsachse bewegt. Andernfalls wird das Kamerabild virtuell so lange und so weit gedreht, bis die durchschnittliche Orientierung des optischen Flussfeldes mit der angenommenen Fahrzeugbewegungsrichtung übereinstimmt.

Darüber hinaus kann das Fahrzeug 101 einen Anhänger 112 aufweisen, an dem ebenfalls mehrere Kameras 113, 114, 115, 116 angebracht sind, die ebenfalls mit der Steuereinheit verbunden sind.

In der Bewertung und Auswertung des optischen Flussfeldes können Größen und Effekte berücksichtigt werden, die als Störungen das Korrekturergebnis verfälschen könnten. Hierbei handelt es sich beispielsweise um die Geschwindigkeit des Fahrzeugs. Die Berechnung und Korrektur sollte in diesem Fall erst ab einer Schwellwertgeschwindigkeit aktiviert sein.

Auch kann die Beschleunigungs-Dynamik des Fahrzeugs berücksichtigt werden, da bei ruhiger Fahrweise ohne dynamische Beschleunigungen davon ausgegangen werden kann, dass das Fahrzeug über eine glatte, ebene Fahrbahn fährt, wodurch das gemittelte optische Flussfeld valide ist.

Darüber hinaus kann ein Gütekriterium für die Tauglichkeit der Fahrbahnoberfläche für die Berechnung des optischen Flussfeldes bestimmt werden. Das Kamerabild sollte im Fahrbahnbereich um das Fahrzeug einen Mindest-Kontrast und Dynamikumfang aufweisen, damit sichergestellt ist, dass gültige und robuste Flussfeldvektoren berechnet werden.

Darüber hinaus kann die Steuereinheit sicherstellen, dass die ermittelten Flussfeldvektoren der einzelnen Kamerabilder nicht zu stark voneinander abweichen, da dies auf einen anderen Systemfehler hindeuten kann. Beispielsweise können auf diese Weise eine fehlerhafte Grundkalibration des Kamerasystems oder ein fehlerhafter Einbau einzelner Kameras identifiziert werden.

Es ist demnach vorgesehen, die Kameras eines Surroundview-Systems für deren Kalibration zu verwenden. Dies kann automatisch ohne Benutzerinteraktion erfolgen, wodurch der Komfort und die Genauigkeit des Surroundview-Systems gesteigert werden kann. Ferner können ungültige Systemzustände (beispielsweise die zu starke Abweichung der Flussfelder der verschiedenen Kameras voneinander) erkannt werden, wodurch eine Störungsmeldung oder Warnung generiert und ausgegeben werden kann.

Dieses Verfahren stellt einen Grundbaustein dar, der für eine vollständig automatische und autonome Kalibration für Surroundview-Systeme vorteilhaft ist.

Als weitere Funktion eines derartigen Systems kann eine Verifikation und Plausibilisierung für Fahrdynamik-Assistenzsysteme (ESP und dergleichen) in Betracht gezogen werden: Wird kurzfristig ein Flussfeld erkannt, welches der durch Antrieb und Lenkung zu erwartenden Richtung/Richtungsänderung des Fahrzeugs nicht entspricht, so kann beispielsweise von einem rutschenden oder sonstig fahrphysikverletzenden Fahrzeugzustand ausgegangen werden. Dies kann insbesondere für Anwendungen interessant sein, bei denen ein Surroundview-System an einem Anhänger des Fahrzeugs montiert ist, der nicht unbedingt über passende Primärsensorik, wie Beschleunigungssensoren, Drehratensensoren oder Magnetfeldsensoren, verfügt.

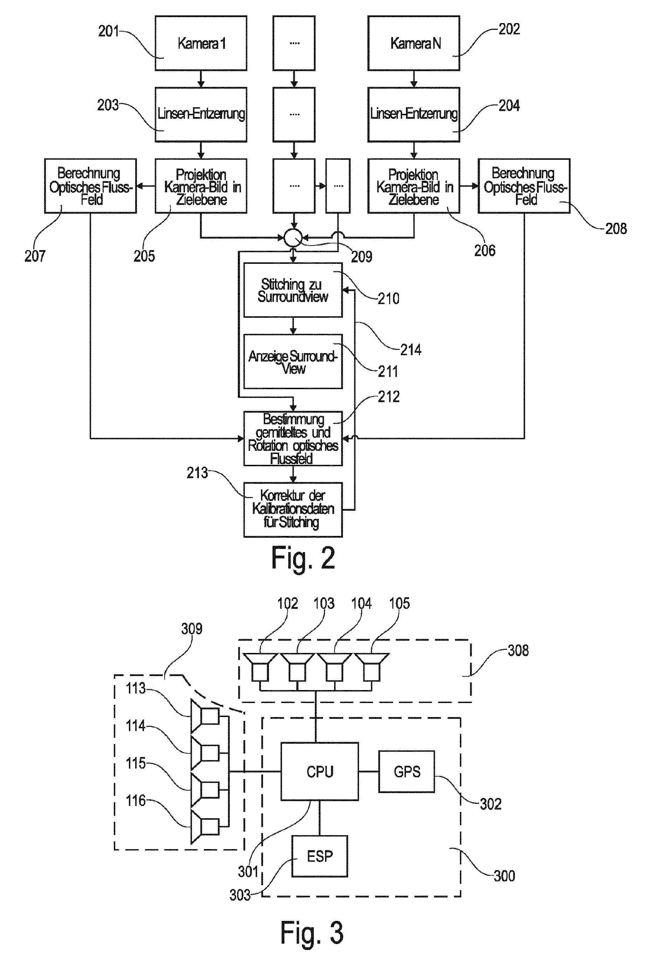

Fig. 2 zeigt ein Flussdiagramm eines Verfahrens gemäß einem Ausführungsbeispiel der Erfindung. In den Schritten 201 und 202 nehmen die verschiedenen N Kameras Bilder der Fahrzeugumgebung auf, welche dann in den Schritten 203 und 204 einer Linsen-Entzerrung unterworfen werden. N ist eine ganze Zahl größer gleich 2.

Jedes einzelne Bild wird dann in den Schritten 205, 206 in die Zielebene projiziert, bei der es sich beispielsweise um die Ebene handelt, auf der das Fahrzeug steht. In Schritt 209 werden die unterschiedlichen, projizierten Kamerabilder zusammengeführt und in Schritt 210 fusioniert. Dieser Vorgang wird auch als "Stitching zu einer Surroundview" bezeichnet. In Schritt 211 kann dieses Gesamtbild dann auf einem Fahrzeugmonitor angezeigt werden, ähnlich wie dies in der Fig. 1 gezeigt ist.

Die einzelnen, projizierten Kamerabilder werden in den Schritten 207, 208 jeweils analysiert und es werden die optischen Flussfelder für jedes Einzelbild berechnet, welche in Schritt 212 zur Bestimmung der durchschnittlichen Orientierung des Gesamtflussfeldes herangezogen werden. Gleichzeitig, davor oder danach bestimmt die Steuereinheit die aktuelle Bewegungsrichtung des Fahrzeugs. Eine Abweichung der Bewegungsrichtung des Fahrzeugs von der durchschnittlichen Orientierung des optischen Flussfeldes führt zu einer Rotation des zusammengesetzten Kamerabildes sowie zu einer Korrektur der Kalibrationsdaten für das Stitching (Schritt 213).

Die korrigierten Kalibrationsdaten für das Stitching können dann in Schritt 214 an den Schritt 210 übergeben werden, um beim erneuten Stitching der unterschiedlichen Kamerabilder berücksichtigt zu werden.

Insbesondere kann vorgesehen sein, dass die unterschiedlichen Einzelkamerabilder nach deren Projektion auf die Zielfläche um unterschiedliche Korrekturwinkel gedreht werden, je nach Richtung (Orientierung) des entsprechenden durchschnittlichen Flussfeldes.

Fig. 3 zeigt ein Kalibrationssystem 300 mit einem daran angeschlossenen Kamerasystem 308, 309. Eine erste Gruppe an Kameras 102, 103, 104, 105 ist an dem Fahrzeug angebracht und eine zweite Gruppe an Kameras 113, 114, 115, 116 ist an einem Anhänger des Fahrzeugs angebracht.

Beide Kameragruppen sind mit der Steuereinheit 301 verbunden. Ebenso ist an die Steuereinheit 301 ein Fahrerassistenzsystem ESP 303 sowie ein Navigationssystem 302 angeschlossen.

Auch das Navigationssystem kann dazu verwendet werden, die tatsächliche Bewegungsrichtung des Fahrzeugs zu bestimmen oder mitzubestimmen.

An dieser Stelle sei angemerkt, dass die Datenübertragung zwischen den einzelnen in Fig. 3 dargestellten Komponenten drahtgebunden oder auch kabellos ausgeführt sein kann.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Kalibrationssystem (300) zur automatischen Korrektur der Gierausrichtung eines Kamerasystems (308, 309) für ein Fahrzeug (101), aufweisend:
eine Steuereinheit (301), die mit dem Kamerasystem kommunikativ verbindbar ist und ausgeführt ist, die folgenden Schritte durchzuführen:
Bestimmung einer durchschnittlichen Orientierung eines optischen Flußfeldes eines Kamerabildes des Kamerasystems während der Fahrt des Fahrzeugs;
virtuelle Drehung des Kamerabildes, bis die durchschnittliche Orientierung des optischen Flußfeldes parallel zur Fahrtrichtung des Fahrzeugs verläuft.

2. Kalibrationssystem (300) nach Anspruch 1, ausgeführt als Surroundview-Kalibrationssystem.

3. Kalibrationssystem (300) nach einem der vorhergehenden Ansprüche,
wobei die Steuereinheit (301) zur automatischen Bestimmung der durchschnittlichen Orientierung des optischen Flußfeldes des Kamerabildes und zur automatischen virtuellen Drehung des Kamerabildes zu verschiedenen Zeiten während des Betriebs des Fahrzeugs ausgeführt ist.

4. Kalibrationssystem (300) nach einem der vorhergehenden Ansprüche,
wobei die Steuereinheit (301) zum Triggern der automatischen Korrektur der Gierausrichtung ausgeführt ist, wenn sie ein Ereignis identifiziert hat, welches zu einem Fehler in der Gierausrichtung führen kann.

5. Kalibrationssystem (300) nach einem der vorhergehenden Ansprüche,
wobei die Steuereinheit (301) mit einem Fahrdynamik-Assistenzsystem (303) kommunikativ verbunden ist und zur Verifikation eines von dem Fahrdynamik-Assistenzsystem festgestellten Bewegungszustands des Fahrzeugs (101) ausgeführt ist.

6. Kalibrationssystem (300) nach einem der vorhergehenden Ansprüche,
ausgeführt zur Bestimmung eines Bewegungszustands eines Anhängers (112) des Fahrzeugs (101).

7. Fahrzeug (101) mit einem Kalibrationssystem (300) nach einem der Ansprüche 1 bis 6.

8. Verfahren zum automatischen Korrigieren der Gierausrichtung eines Kamerasystems (308, 309) für ein Fahrzeug (101), das Verfahren aufweisend die Schritte:
Bestimmen einer durchschnittlichen Orientierung eines optischen Flußfeldes eines Kamerabildes des Kamerasystems während der Fahrt des Fahrzeugs;
virtuelles Drehen des Kamerabildes, bis die durchschnittliche Orientierung des optischen Flußfeldes parallel zur Fahrtrichtung des Fahrzeugs verläuft.

9. Programmelement, das, wenn es auf einer Steuereinheit eines Kalibrationssystems (300) ausgeführt wird, die Steuereinheit (301) anweist, die folgenden Schritte durchzuführen:
Bestimmen einer durchschnittlichen Orientierung eines optischen Flußfeldes eines Kamerabildes des Kamerasystems während der Fahrt eines Fahrzeugs (101);
virtuelles Drehen des Kamerabildes, bis die durchschnittliche Orientierung des optischen Flußfeldes parallel zur Fahrtrichtung des Fahrzeugs verläuft.

10. Computerlesbares Medium, auf dem ein Programmelement nach Anspruch 9 gespeichert ist.
